# EUROPEAN PATENT SPECIFICATION

(11) **EP 1 296 840 B1**
(45) Date of publication and mention of the grant of the patent: **21.10.2009**
(21) Application number: 01923662.9
(22) Date of filing: 12.03.2001
(51) Int. Cl.: B44C 1/22, B44C 1/20

(54) **METHOD OF PRODUCING PERMANENT IDENTIFICATION ON GLASS SEGMENTS**
VERFAHREN ZUM HERSTELLEN EINER DAUERHAFTEN MARKIERUNG AUF EINEM GLASTEIL
PROCEDE DE PRODUCTION D'IDENTIFICATION PERMANENTE SUR SEGMENTS DE VERRE

(30) Priority: 09.06.2000 CZ 20002168
(43) Date of publication of application: 02.04.2003
(73) Proprietor: AGC Flat Glass Europe SA, 1170 Bruxelles (BE)
(72) Inventor: PEK, Alexander, 415 01 Teplice (CZ); SIP, Pavel, 589 00 direc nad Doubravou (CZ); STIPAN, Jaroslav, 17 53 Svitec (CZ)
(74) Representative: Decamps, Alain René François
(86) International application number: PCT/EP2001/002760
(87) International publication number: WO 2001/094128

(56) References cited:
- EP-A- 0 637 517
- EP-A- 0 868 960
- DE-A- 3 539 047
- US-A- 5 030 551

## Description

The invention relates to a method of producing permanent identification on glass sheets, especially on safety glass for vehicles during their manufacture.

Safety glass, such as automobile glass, may be marked with the name or the logo of the glass manufacturer, and/or, the name or logo of the automobile constructor. The marking may further comprise normalisation characteristics appropriate for the given type of safety glass and the date on which the glass was manufactured. This marking provides identification at a glance of the glass manufacturer, and in some cases identification of the product and time of production, by which the manufacturer gives a guarantee of the quality and safety of the glass.

The capacity of highly automated and operative production lines, for example in the automotive industry, allows production on a mass scale of thousands of units of glass sheets per day and, in some cases, per hour. During one day, a number of technological parameters may vary, for example during the heating, tempering or bending of the glass sheet and may cause, in the case of particular technological operations, significant differences in the characteristics of the manufactured glass sheet. It is therefore desirable to identify the precise moment at which the glass sheet is manufactured in order to determine the specific technological and composition parameters associated with it.

Known marking methods may be used to provide a daily marking whereas their use to provide a marking including both the date and time of manufacture may be too long to achieve and could negatively affect the speed of production. This daily marking may be achieved on the glazing at the end of the manufacturing process and before it is mounted in the vehicle.
One disadvantage of having a marking which includes only the date of manufacture is that a great number of glazings mounted in different vehicles will have the same marking.
Another disadvantage of such a marking is that once the glazing is mounted in the vehicle, it may be impossible to trace the production line on which it was manufactured and the parameters of production associated to it. These parameters are important since they may influence the chemical and physical characteristics of the glazing.
One of the consequence of these known marking methods is that a client who wishes to obtain the individual technological characteristics of its glazing may have to refer back to the firm which provided the marking.

For the marking of automotive glass, sand-blasting may be used. For instance, European patent n° 647 504 describes the equipment for the marking of glass for vehicles by jet blasting of abrasive materials to create the layout of the selected parts of the surface of the glass. Sand-blasting is not currently used mainly due to the high energy and time requirements of the process, and also because the surface of the glass may be damaged in the course of this process.

European patent n° 433 137 describes a method for permanent identification of a sheet of glass with applications for glazings mounted in vehicles. The identification mark is created on a glass sheet by causing interaction between an organic ink and an enamel, for example in the form of a peripheral band, during heat treatment of the glass.

European patent n° 637 517 describes a laser marking, through a glass sheet, of a portion of a peripheral black enamel band at which the enamel is adhered into the vehicle body work.

At present, the most common method for marking automotive glass is silk-screen printing, during which, the required marks are applied on the surface of the glass before heat treatment with the aid of a screen-printing mesh. This method is fast and reliable but has the disadvantage of producing a large series of glazings without individual information of each glass sheet.

According to one aspect, the present invention provides a method for producing permanent identification on glass sheets as defined in Claim 1.

The method according to the present invention may be included in the production cycle and therefore may provide the glass sheet with individual information directly related to production parameters, which information is specific of the glass sheet. For example, this information may be related to the chemical composition and physical characteristics of the glass sheet which it may be desirable to be able to trace once the glass is mounted in a vehicle.

The method according to Claim 1 may provide identification of the glass sheet at a glance.

The block of enamel paint may be rectangular or of any other suitable shape.

Preferably, the enamel paint is a silk-screenable paint or a tampon-printing colour.

The present invention may be used to provide an unambiguous and individual marking of each glass sheet and a glass identification which is visible and permanent.

The identification of one product with respect to another and its tracing in the course of a process, for example during production and assembling, is therefore facilitated.

The permanent identification according to the present invention may be used on all types of glass for vehicles and automobiles, for example laminated windscreen, rear windows, side windows and roof windows, without causing damage to the glass. Moreover, the permanent identification may increase the safety of the vehicle against theft.

Another advantage of the permanent identification according to the present invention is that it may be inserted into automated production of glass, without interrupting the speed of the production cycle.

A further advantage of the present invention is that production and variation of the screen-printing design may be used for various types of time marking. This also applies to the tampon or transfer printing design.

Preferably, the laser used to remove a layer of enamel paint from the original block of enamel paint is a high quality of beam TEM₀₀ having an output of 5 W and a density output of 1.3 kW.mm⁻² which is generated by a laser head Nd:YAG having a wavelength of 1.06 m⁻⁶, with a driving system of marking and description of the material, generally called longitudinally diode drawn laser. Alternatively, a laser beam of type CO₂ with a wavelength of 10.6 m⁻⁶ or other laser beams. Both types of laser have the advantage of not damaging the surface of the glass. The laser will preferably be directed onto the block of enamel paint from the side of the glass sheet which carries the block of enamel paint, and not through the glass sheet from the other side of the glass sheet.

Another advantage of the present invention is the possibility of linking the directional control of the laser beam to a computer database which provides identification information for each glass sheet. This computer database may provide individual information allowing the immediate identification of the printing equipment used and/or any immediate data relative to the individual characteristics and properties of the glass sheet, such as time data. This data may be presented in the form of a code, for example a bar code, written, number, graphic or picture code or any combination of these. The printed information may be kept in the memory of the computer database for a period of at least 3 years, preferably of 5 years, thereby ensuring safe preservation of information and facilitating eventual complaint procedures from the client.

Preferably, before the glass sheet is sent to the automotive constructor, an additional bar code, having the same code number as the enamel bar code on the glass sheet, may be produced on a self adhesive label which will be attached to the glass sheet. When the constructor assembles the different glass sheets in the vehicle, the additional bar code is detached and added to the log book of the individual vehicle. This provides the advantage of facilitating the tracing by the constructor of the glass sheet on a particular vehicle.

The invention will now be described, by way of example only, with reference to the accompanying drawings in which :

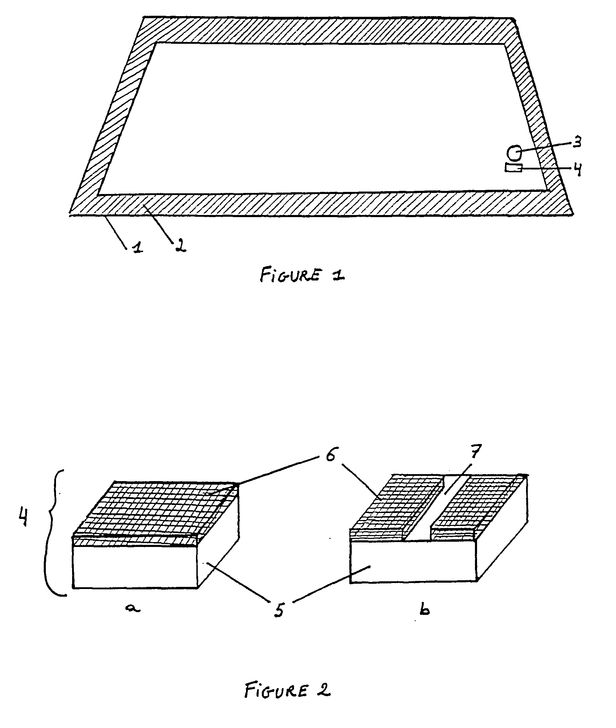

Figure 1 shows a vehicle glass sheet (1) comprising a peripheral enamel band (2), a regular mark (3) and a block of enamel paint (4). The latter marking is spaced from the peripheral enamel band (2) in order to provide individual identification of the glass sheet at a glance, for example when the glass sheet is mounted in a vehicle. This may be particularly advantageous when using the marking for example to trace theft of the vehicle.
Figure 2a shows the rectangular block of enamel paint comprising the portion of glass sheet (5) and the enamel paint (6).
Figure 2b shows the block of enamel paint (4) after at least one laser beam has been directed and has removed at least part of a layer of enamel paint (6) at desired position (7).

In order to manufacture, for example, a marked transparent side window of a vehicle, the following steps may be carried out.

Firstly, a piece of flat glass is cut and ground at the edges to the appropriate shape and is washed.

Secondly, the glass is inserted in a positioning template in order to be in a required position for the printing step. The printing is achieved at part of the surface of the glass sheet, preferably a visible corner, which surface will be positioned towards the inside of the vehicle upon assembling of the glass. The printing may be achieved by silk-screen printing of enamel paint using a MARAFLEX 1-T 56M type mesh but alternative printing methods may also be used. The information printed by this method may comprise the name of the glass manufacturer and its logo, the type of glass sheet used, and information relative to the required normalisation tests confirming the safety parameters of the glass. A block of paint in the shape of a rectangle 30 mm wide by 10 mm high is simultaneously printed with this information and a laser beam is subsequently directed towards this block in such a way that it removes at least part of a layer of the block only at positions required to provide identification information specific to the glass sheet. The paint may be allowed to dry prior to the action of the laser beam. The laser beam removes the enamel paint from selected positions from the surface of the glass sheet, for example by evaporation or ablation, without damaging the surface of the glass. The time required for the laser to operate may depend upon the type of enamel, the adherence of the layer of enamel paint to the glass and on the size of the area to be removed. The laser beam is connected to a computer database which provides information for the operation of the laser beam itself and thus provides unambiguous and individual code for each glass sheet. The database preferably keeps the information in memory for a certain period of time which period is preferably of at least three years.

Finally, the marking on the glass sheet undergoes heat treatment which hardens the enamel paint and fuses it to the glass surface. This is preferably achieved during a subsequent bending, tempering, and/or any other treatment of the glass sheet.

The information printed may relate not only to the day of manufacture, but may additionally contain data regarding the hour, minute and/or seconds, and an identification number of the equipment by which the printing was executed. The information may additionally contain codes relative to the automated work place or other graphic elements and marks, for example bar codes, or other codes with higher corresponding value than the bar codes, for example two-dimensional codes.

The present invention further relates to a glass sheet comprising a permanent identification marking which is located on at least one non-peripheral portion of the glass sheet and comprises individual information and identification data of the glass sheet which comprise the date and the time of manufacture of the glass sheet.

The present invention also relates to a glass sheet comprising a peripheral enamel band and a permanent identification marking which is spaced from the peripheral band and which marking comprises individual information and identification data of the glass sheet which comprise the date and the time of manufacture of the glass sheet.

The permanent identification is preferably a bar code which is advantageously produced by laser beam ablation or laser beam evaporation.

The glass sheet according to the present invention is preferably an automotive glazing. The permanent identification of the glass sheets according to the present invention is designed for visible, individual and unambiguous identification of each unit of safety glass, especially for transport means, and everywhere where it is advantageous to mark glass such as road freight vehicles, for windows or doors of rail transport, or, as the case may be, plane or automobile transport, or for other types of safety glass, such as safety doors, walls and windows.

## Claims

1. A method of producing permanent identification on glass sheets during the manufacture thereof, especially on safety glass for vehicles, comprising the steps of applying a mark of enamel paint on at least one portion of a surface of a glass sheet, heating the glass sheet and subsequently cooling the glass sheet, wherein before heating the glass sheet (1) a layer of enamel paint in the form of at least one block (4) is printed on at least one non-peripheral portion of the glass sheet, and that at least one laser beam is subsequently directed onto the block of enamel paint in such a way that it removes at least part of a layer of enamel paint at desired positions (7) from the original block of enamel paint substantially down to the surface of the glass thereby providing the glass sheet with individual information and identification data.

2. The method, according to claim 1, **characterised in that** the block of enamel is printed simultaneously with a regular mark and a permanent identification

3. The method, according to any preceding claim, **characterised in that** the enamel paint is a silk-screenable paint.

4. The method, according to any of claims 1 and 2, **characterised in that** the enamel paint is transfer printed. '

5. The method, according to any preceding claim, **characterised in that** the laser is of Nd:YAG type drawn by diodes.

6. The method, according to any of claims 1 to 4, **characterised in that** the laser is of CO2 type.

7. The method, according to any preceding claim, **characterised in that** the directional control of the laser beam is linked to a computer database which provides identification information for each glass sheet.

8. The method, according to claim 7, **characterised in that**, the computer database provides immediate time data.

9. The method, according to any of claims 7 and 8, **characterised in that**, the computer database provides immediate information identifying the laser printing equipment.

10. The method, according to any of claims 7 to 9, **characterised in that**, the computer database provides any immediate data characterizing and/or specifying the properties of one printed glass sheet in the form of any kind of bar codes, written, number, graphic or picture codes or any combination of these.

11. The method, according to any of claims 7 to 10, **characterised in that**, the computer database keeps in its memory the printed information for a period of time of at least three years.

12. The method, according to any preceding claim, **characterised in that** the laser beam is directed on the side of the glass sheet which comprises the block of enamel paint.

13. The method, according to any preceding claim, in which the permanent identification comprises a bar code and in which an additional bar code is produced on a self adhesive label which is attached to the glass sheet.

14. The method, according to claim 13, in which the additional bar code has a code number identical to the code number of the permanent identification.

## Patentansprüche

1. Verfahren zum Produzieren bzw. Erzeugen einer permanenten bzw. dauerhaften Kennung bzw. Identifikation auf Glasscheiben, insbesondere auf Sicherheitsglas für Fahrzeuge, während deren Herstellung, umfassend die Schritte
eines Anbringens einer Markierung aus Emailfarbe auf zumindest einen Teil einer Oberfläche bzw. Fläche einer Glasscheibe,
eines Erhitzens der Glasscheibe und anschließend
eines Kühlens der Glasscheibe,
wobei vor dem Erhitzen der Glasscheibe (1) eine Schicht aus Emailfarbe in der Form zumindest eines Blocks (4) auf zumindest einen nicht-peripheren Teil bzw. Abschnitt der Glasscheibe gedruckt wird und, dass zumindest ein Laserstrahl derart im Wesentlichen auf den Block aus Emailfarbe gerichtet ist, dass er zumindest einen Teil einer Schicht aus Emailfarbe an gewünschten Positionen (7) von dem ursprünglichen Block aus Emailfarbe im Wesentlichen nach unten bis zu der Oberfläche der Glasscheibe entfernt, wodurch die Glasscheibe mit individuellen Informationen und Kennungsdaten versehen wird.

2. Verfahren nach Anspruch 1, **dadurch gekennzeichnet, dass** der Block aus Email gleichzeitig mit einer regulären Markierung und einer permanenten Kennung bedruckt wird.

3. Verfahren nach einem vorhergehenden Anspruch, **dadurch gekennzeichnet, dass** die Emailfarbe eine siebdruckbare Farbe ist.

4. Verfahren nach einem der Ansprüche 1 und 2, **dadurch gekennzeichnet, dass** die Emailfarbe transfergedruckt wird.

5. Verfahren nach einem vorhergehenden Anspruch, **dadurch gekennzeichnet, dass** der Laser vom Typ Nd:YAG gezogen (engl.: drawn by) von Dioden ist.

6. Verfahren nach einem der Ansprüche 1 bis 4, **dadurch gekennzeichnet, dass** der Laser vom Typ CO2 ist.

7. Verfahren nach einem vorhergehenden Anspruch, **dadurch gekennzeichnet, dass** die gerichtete Steuerung bzw. Regelung des Laserstrahls mit einer Computerdatenbank gekoppelt ist, die Kennungsinformationen für jede Glasscheibe bereitstellt.

8. Verfahren nach Anspruch 7, **dadurch gekennzeichnet, dass** die Computerdatenbank unmittelbare bzw. sofortige bzw. gegenwärtige Zeitdaten bereitstellt.

9. Verfahren nach einem der Ansprüche 7 und 8, **dadurch gekennzeichnet, dass** die Computerdatenbank unmittelbare Informationen bereitstellt, die das Laserdruch-Ausrüstung identifiziert.

10. Verfahren nach einem der Ansprüche 7 bis 9, **dadurch gekennzeichnet, dass** die Computerdatenbank jegliche unmittelbare Daten bereitstellt, die die Eigenschaften einer bedruckten Glasscheibe in Form irgendeiner Art von Barcodes, geschriebenen, numerisch, graphischen oder Bildcodes oder jede Kombination von diesen charakterisieren und/oder spezifizieren.

11. Verfahren nach einem der Ansprüche 7 bis 10, **dadurch gekennzeichnet, dass** die Computerdatenbank die gedruckten Informationen für eine Zeitraum von zumindest drei Jahren speichert.

12. Verfahren nach einem vorhergehenden Anspruch, **dadurch gekennzeichnet, dass** der Laserstrahl auf die Seite der Glasscheibe gerichtet ist, die den Block aus Emailfarbe umfasst.

13. Verfahren nach einem vorhergehenden Anspruch, in welchem die unmittelbare Kennung einen Barcode umfasst und in welchem ein zusätzlicher Barcode auf einem selbstklebenden Aufkleber erzeugt wird, welcher auf der Glasscheibe befestigt wird.

14. Verfahren nach Anspruch 13, in welchem der zusätzliche Barcode eine Codenummer aufweist, die identisch zu der Codenummer der unmittelbaren Kennung ist.

## Revendications

1. Une méthode pour la production d'une identification permanente sur des feuilles de verre, durant leur fabrication, en particulier sur du verre de sécurité pour véhicules, comprenant les étapes d'application d'un marquage de peinture-émail sur au moins une portion d'une surface d'une feuille de verre, le chauffage de la feuille de verre et le refroidissement subséquent de la feuille de verre, dans laquelle avant le chauffage de la feuille de verre (1) une couche de peinture-émail sous la forme d'au moins un bloc (4) est imprimée sur au moins une portion non périphérique de la feuille de verre et dans laquelle au moins un faisceau laser est ensuite dirigé sur le bloc de peinture-émail de telle sorte qu'il enlève au moins une partie de la couche de peinture-émail aux positions souhaitées (7) du bloc d'origine de peinture-émail substantiellement jusqu'à la surface du verre en dotant ainsi la feuille de verre d'informations individuelles et de données d'identification.

2. La méthode, selon la revendication 1, **caractérisée en ce que** le bloc d'émail est imprimé simultanément avec un marque régulière et une identification permanente.

3. La méthode, selon l'une quelconque des revendications précédentes, **caractérisée en ce que** la peinture-émail est une peinture sérigraphiable.

4. La méthode, selon l'une quelconque des revendications 1 et 2, **caractérisée en ce que** la peinture-émail est imprimée par transfert.

5. La méthode, selon l'une quelconque des revendications précédentes, **caractérisée en ce que** le laser est du type Nd:YAG pompé par diodes.

6. La méthode, selon l'une quelconque des revendications 1 et 4, **caractérisée en ce que** le laser est de type CO2.

7. La méthode, selon l'une quelconque des revendications précédentes, **caractérisée en ce que** le contrôle directionnel du rayon laser est lié à une base de données informatique qui fournit des informations d'identification pour chaque feuille de verre.

8. La méthode, selon la revendication 7, **caractérisée en ce que** la base de données informatique donne des données de temps immédiates.

9. La méthode, selon l'une quelconque des revendications 7 et 8, **caractérisée en ce que** la base de données informatique donne des informations immédiates identifiant l'équipement d'impression au laser.

10. La méthode, selon l'une quelconque des revendications 7 à 9, **caractérisée en ce que** la base de données informatique donne des données immédiates caractérisant et/ou spécifiant les propriétés d'une feuille de verre imprimée sous la forme de tout type de codes-barres, de codes écrits, numériques, graphiques ou picturaux ou d'une combinaison de ceux-ci.

11. La méthode, selon l'une quelconque des revendications 7 à 10, **caractérisée en ce que** la base de données informatique garde en mémoire l'information imprimée pendant une période d'au moins trois ans.

12. La méthode, selon l'une quelconque des revendications précédentes, **caractérisée en ce que** le rayon laser est dirigé sur la face de la feuille de verre qui comprend le bloc de peinture-émail.

13. La méthode, selon l'une quelconque des revendications précédentes, dans laquelle l'identification permanente comprend un code-barres et dans laquelle un code-barres supplémentaire est produit sur une étiquette autocollante qui est collée sur la feuille de verre.

14. La méthode, selon la revendication 13, dans laquelle le code-barres supplémentaire a un numéro de code identique au numéro de code de l'identification permanente.
